# EUROPEAN PATENT SPECIFICATION

(11) **EP 2 573 041 B1**
(45) Date of publication and mention of the grant of the patent: **25.10.2017**
(21) Application number: 12185511.8
(22) Date of filing: 21.09.2012
(51) Int. Cl.: B66F 9/075, G06Q 10/08, B66F 17/00, G01G 19/08

(54) **Apparatus and method for the identification and weighing of cargo**
Vorrichtung und Verfahren zur Erkennung und zum Wiegen von Fracht
Appareil et procédé pour l'identification et le pesage de cargaison

(30) Priority: 21.09.2011 GB 201116302
(43) Date of publication of application: 27.03.2013
(73) Proprietor: Palletforce Plc, Staffordshire DE14 2SY (GB)
(72) Inventor: Worgan, Carl, Burton Upon Trent, Staffordshire DE14 2SY (GB)
(74) Representative: Swindell & Pearson Limited

(56) References cited:
- EP-A1- 2 143 683
- EP-A2- 0 575 894
- JP-A- 2004 213 157
- US-A1- 2006 266 839
- US-A1- 2007 096 919
- US-A1- 2011 130 865

## Description

Embodiments of the present invention relate to apparatus and methods for the identification and weighing of cargo.

In the present specification cargo includes any freight, object(s) or goods being transported or for transporting.

The transportation of cargo on vehicles often involves weighing of the cargo to ensure that the total weight of the cargo loaded onto a vehicle does not exceed any limitations imposed by law or other relevant regulations. In addition, the cost to transport cargo is often determined to at least some extent by the weight of the cargo. Typically the weighing of cargo is done by weigh-bridge, or weigh-platform. It is also typically necessary or desirable for cargo or freight to be identified to ensure appropriate handling.

EP2143683 relates to a method and apparatus for determining the number of pallet loads moved by a fork lift truck, generally for the purpose of determining operator productivity levels, determining truck maintenance requirements and determining when lease and rental fees are due. A weight sensor is used for weighing a pallet load, a height sensor for measuring the height of the forks, and a distance sensor for determining whether the vehicle has moved. A vehicle control system is provided in the fork lift truck in communication with the weight sensor, the height sensor and the distance sensor, and is programmed to receive the control signals from those sensors. A scanning device may be coupled to the vehicle control system, programmed to read an identifier associated with a load to be moved, in particular once a determination has been made that a load has been moved, the scanning device may be read to identify the load.

US 2011/130865 A1 discloses an apparatus for treating cargo and method for the identification and weighing of cargo, wherein cargo is positioned relative to a vehicle for lifting and transporting cargo, an identification marking on the cargo is scanned by a scanner mounted on the vehicle, to identify the cargo, and the cargo is weighed. The present invention is as set out in the independent claims.

According to one example of the present invention there is provided an apparatus according to claim 8 for treating cargo, the apparatus comprising a scanner on a vehicle for lifting and transporting the cargo, the scanner mounted on the vehicle via an anti-vibration mounting for scanning an identification marking on the cargo, and weighing means for measuring the weight of the cargo.

The scanner is arranged on the vehicle to operatively face a surface of the cargo on which the identification marking is provided.

The scanner is operable to scan an area of the surface to locate and read the identification marking.

The scanner may be located on the front of the vehicle. The scanner may be mounted in a forward facing direction to scan cargo in front of the vehicle.

The scanner may be operable to read an identification marking comprising a barcode.

The apparatus may comprise lifting means for lifting the cargo. The lifting means may be located on the vehicle. The lifting means may be located on the front of the vehicle.

The scanner may be mounted on the lifting means.

The scanner generates signals relating to the identification marking. The signals relating to the identification marking contain data relating to the identification of the cargo. The apparatus comprises a first receiver. The scanner transmits the signals to be received by the first receiver. The apparatus comprises a first processor operable to process the signals received by the first receiver and provide a data output. The apparatus may further comprise a first memory operable to store the signals, or the data output from the first processor.

The apparatus comprises a first transmitter operable to transmit the signals or the data output from the first processor to a second receiver. The apparatus comprises a second processor operable to process or further process the signals or data output from the first processor, received by the second receiver, and provide a further data output. The apparatus may further comprise a second memory suitable for storage of the signals or data output from the first or second processor. The apparatus comprises a second transmitter operable to transmit signals or data from the second processor to the first receiver.

The second receiver, second processor, and second transmitter are located remotely from the vehicle.

The apparatus may further comprise a display operable to display the signals, or the data output from the first or second processor.

The first receiver may be operable to receive signals from a plurality of scanners. The first processor and/or second processor may be operable to process signals from a plurality of scanners. The second processor may be operable to process data from a plurality of first processors.

The display may be operable to receive data output from the first processor and/or the second processor and to display information relating to the cargo. The information may be in a form intelligible to a human operative of the vehicle. The information may relate to one or more of the identification of the cargo, nature of the cargo, content of the cargo, owner of the cargo, transporter of the cargo, intended recipient of the cargo, where the cargo originated from, where the cargo is to be transported to, the weight of the cargo, the service level for the cargo.

The scanner comprises a light source and a sensor. The sensor is operable to detect reflected light from the light source. The scanner may comprise a line scan sensor. The light source may be a visible or infra-red light source.

The sensor may be positioned to receive the light reflected from the cargo. An oscillating mirror is positioned to reflect the light reflected from the cargo towards the sensor.

The oscillating mirror is operable to scan the cargo with the light projected from the light source, generally perpendicular to the axis of the line scan sensor.

The scanner may be operable before, during and/or after the transportation of the cargo with the vehicle.

The weighing means may be located on the vehicle. The weighing means may be located on the front of the vehicle. The weighing means may be associated with and may be located on the lifting means.

The weighing means generates signals relating to the weight of the cargo and transmits the signals to the first receiver. The signals relating to the weight of the cargo contain data relating to the weight of the cargo. The first processor is operable to process the signals relating to the weight of the cargo received by the first receiver and provide a data output. The first memory may be operable to store the signals, or the data output from the first processor.

The first transmitter is operable to transmit the signals or the data output from the first processor to the second receiver. The second processor is operable to process or further process the signals or data output from the first processor, received by the second receiver, and provide a further data output. The second memory may be suitable for storage of the signals or data output from the first or second processor. The second transmitter is operable to transmit signals or data from the second processor to the first receiver.

The display may be operable to display the signals, or the data output from the first or second processor.

The first receiver may be operable to receive signals from a plurality of weighing means.

The vehicle may have a driving station from which an operator of the vehicle can drive. The driving station may face forwards from the vehicle.

The display may be viewable by the operator whilst driving the vehicle. The display may be mounted in the vehicle, to be viewable by the operator during operation of the vehicle.

The apparatus may have means for the operator to selectively actuate the scanner and/or weighing means. The apparatus may automatically activate upon lifting or other engagement of the cargo by the vehicle. The apparatus may automatically activate upon transportation of the cargo.

The vehicle may be a fork lift truck. The fork lift truck may comprise a body mounting a cab for housing an operator, the cab having a driving station for the operator, a guard surrounding the cab for protecting the operator, a substantially vertical mast connected to the body, a crosshead mounted on the mast towards its uppermost extremity, a carriage mounted on the mast, the carriage being capable of movement relative to the mast, a carriage lifting mechanism mounted between the crosshead and the carriage, to facilitate movement of the carriage in relation to the mast, and forks connected to the carriage.

The scanner may be located on the cab of the fork lift truck. The scanner may be located on the carriage of the fork lift truck. The scanner may be located on the forks of the fork lift truck.

The weighing means may be located on the carriage of the fork lift truck. The weighing means may be located on the forks of the fork lift truck.

The scanner may scan cargo on the vehicle to read an identification marking on the cargo whilst the cargo is on the vehicle. The scanner may be as described in any of the preceding paragraphs.

The scanner is mounted at a position to scan a surface of the cargo on which the identification marking is provided. The scanner may be mounted in a forward facing direction to scan cargo in front of the vehicle.

The scanner may be operable to read an identification marking comprising a barcode.

The scanner generates signals which contain data relating to the identification of the cargo. The scanner is operable to transmit signals relating to the identification of the cargo to a receiver.

The scanner comprises a light source and a sensor. The sensor detects light from the light source. The scanner comprises a line scan sensor. The light source may be a visible or infra-red light source.

The sensor is positioned to receive the light reflected from the cargo. An oscillating mirror is positioned to reflect the light reflected from the cargo towards the sensor.

The oscillating mirror is operable to scan the cargo with the light projected from the light source, generally perpendicular to the axis of the line scan sensor.

The scanner may be operable before, during and/or after the transportation of the cargo.

According to a further embodiment of the invention, there is provided a method according to claim 1 for the identification and weighing of cargo wherein cargo is positioned relative to a vehicle, an identification marking on the cargo is scanned by a scanner mounted on the vehicle via an anti-vibration mounting, to identify the cargo, and the cargo is weighed. The cargo may be positioned on the vehicle when scanned.

The scanner may be directed to face a surface of the cargo on which the identification marking is provided.

The scanner may scan an area of the surface to locate and read the identification marking, which area may be a lower most area of the surface.

The scanner may direct the scan in front of the vehicle.

The scanner may read an identification marking comprising a barcode.

Cargo may be lifted by the vehicle using lifting means located on the vehicle. Cargo may be lifted from the front of the vehicle.

The scanner may generate and transmit light towards the cargo. Light may be reflected from the surface of the cargo and may be detected by a sensor in the scanner.

The angle of the light transmitted from the scanner and directed towards the cargo may be varied in a plane generally perpendicular to the sensor. A range of angles may be used such that the surface of the cargo is scanned by the light. The light reflected from the cargo may be directed to the sensor in the scanner.

The scanner may generate signals relating to the light reflected from the cargo. The scanner generates signals relating to the identification marking. The signals may be transmitted by the scanner to be received by a first receiver. The signals are transmitted via serial port, USB, Ethernet or other hardwired connection. The signals may be transmitted to the first receiver wirelessly. The signals received by the first receiver are processed by a first processor to provide a data output. The signals or the data output from the first processor may be stored in a first memory.

The signals or the data from the first processor are transmitted from a first transmitter to a second receiver. Signals or data received at the second receiver are processed by a second processor to provide a further data output. The signals or the data output from the first processor or second processor may be stored in a second memory. Signals or data from the second processor are transmitted by a second transmitter to the first receiver.

The first receiver may receive signals from a plurality of scanners. The first processor and/or second processor may process signals from a plurality of scanners. The second processor may process data from a plurality of first processors.

Signals from the sensor and/or data output from the first processor and/or the second processor may be displayed on a display. The information may be in a form intelligible to a human operative of the vehicle. The information may relate to one or more of the identification of the cargo, nature of the cargo, content of the cargo, owner of the cargo, transporter of the cargo, intended recipient of the cargo, where the cargo originated from, where the cargo is to be transported to, the weight of the cargo, the service level for the cargo. The information may be used by the operative to determine where the cargo is to be transported to.

The scanner may scan the cargo before, during and/or after the transportation of the cargo with the vehicle.

The weight of cargo may be determined by locating the cargo on the weighing means. The cargo may be lifted by the lifting means to be located on the weighing means. The cargo may be lifted and weighed in the same operation.

Signals relating to the weight of the cargo may be generated by the weighing means. The weighing means may transmit signals relating to the weight of the cargo to the first receiver. The signals may be transmitted via serial port, USB, Ethernet or other hardwired connection. The signals may be transmitted to the first receiver wirelessly. The signals received by the first receiver are processed by the first processor to provide a data output. The signals or the data output from the first processor may be stored in the first memory.

The signals or the data from the first processor are transmitted from the first transmitter to the second receiver. Signals or data received at the second receiver are processed by the second processor to provide a further data output. The signals or the data output from the first processor or second processor may be stored in the second memory. Signals or data from the second processor are transmitted by the second transmitter to the first receiver.

Signals from the weighing means and/or data output from the first processor and/or the second processor may be displayed on the display. The information may be in a form intelligible to a human operative of the vehicle.

The vehicle may be driven by an operator from a driving station.

The operator may view the display whilst driving and/or operating the vehicle.

The operator may selectively actuate the scanner and/or weighing means. The scanner may scan the cargo automatically when in alignment with the cargo. The scanner may scan the cargo automatically upon lifting or other engagement of the cargo by the vehicle. The cargo may be scanned by the scanner automatically upon transportation of the cargo. The weight of the cargo may be determined automatically upon lifting or other engagement of the cargo by the vehicle. The cargo may be weighed by the weighing means automatically upon transportation of the cargo.

For a better understanding of various examples of embodiments of the present invention reference will now be made, by way of example only, to the accompanying drawings, in which:
Fig. 1 is a diagrammatic perspective view of a vehicle of apparatus of the present invention, about to engage cargo in the form of a loaded pallet;
Fig. 2 is a diagrammatic perspective view of the vehicle of Fig. 1 with the cargo thereon;
Fig. 3 is a diagrammatic front view of a vehicle with a scanner arrangement according to the present invention;
Fig. 4 is a diagrammatic front view of a display unit according to the present invention.
Fig. 5 is a diagrammatic perspective view of a scanner according to the present invention;
Fig. 6 is a schematic illustration of a flow of operation of loading and unloading cargo according to the present invention;
Fig. 7 is a schematic illustration of a flow of operations in the identification and weighing of cargo in accordance with the present invention.

The present invention provides apparatus 10 for the identification and weighing of cargo C, the apparatus 10 comprising a vehicle 14 for lifting and transporting the cargo C, a scanner 16 mounted on the vehicle 14 for scanning an identification marking 18 on the cargo C, and weighing means 20 for measuring the weight of the cargo C.

The present invention further provides a scanner 16 for a vehicle 14 for lifting and transporting cargo C, the scanner 16 comprising means to mount the scanner 16 to the vehicle 14 to scan cargo C to read an identification marking 18 on the cargo C.

The present invention still further provides a method for the identification and weighing of cargo C wherein cargo C is positioned relative to a vehicle 14, an identification marking 18 on the cargo C is scanned by a scanner 16 mounted on the vehicle 14, to identify the cargo C, and the cargo C is weighed.

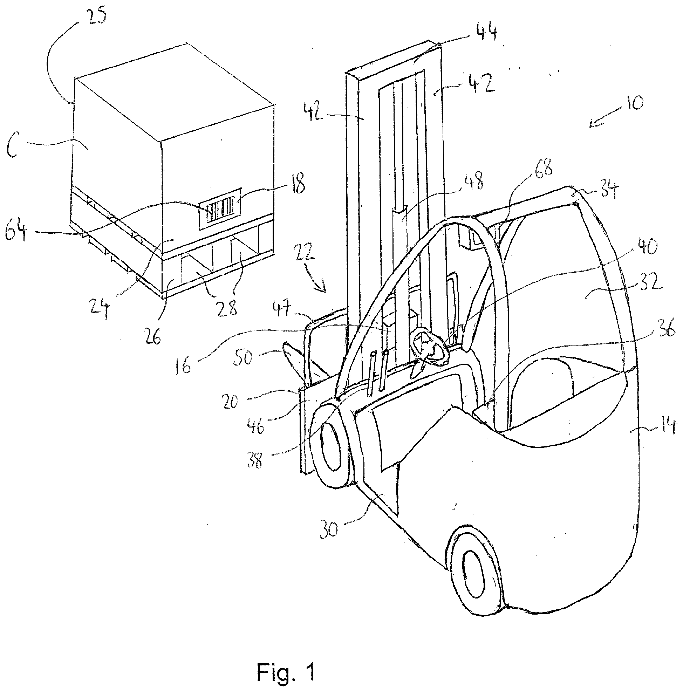

In an example of the invention, illustrated in Figs. 1, 2 and 3, the vehicle 14 is a fork lift truck, suitable for use in lifting and transporting cargo C, such as palletised goods. The forklift truck comprises a body 30 upon which a cab 32 is mounted. The cab 32, which is surrounded by a guard 34, houses an operator (not shown) of the vehicle 14. The guard 34 provides protection for the operator from falling objects and during accidental rolling of the vehicle 14. The cab 32 has a driving station 36 for the operator, which consists of controls 38 for operation of the forks 50 of the forklift truck 14, and controls 40 for driving the forklift truck 14. The forks 50 are generally disposed on the front 22 of the forklift truck 14.

The forklift truck 14 has a substantially vertical mast 42 connected to the body 30, a crosshead 44 mounted on the mast 42 towards its uppermost extremity, and lifting means 46, such as a carriage mounted on the mast 42. The carriage 46 is capable of movement relative to the mast 42, and is moved by a lifting mechanism 48, such as a chain hoist or hydraulic ram (as illustrated), mounted between the crosshead 44 and the carriage 46. The carriage may comprise a backrest 47. The forklift truck carriage 46 is then connected to two forks 50 which are capable of being inserted into the openings 28 of a pallet 26 upon which cargo C can be placed.

In the example illustrated, the cargo C is mounted on a pallet 26 which defines openings 28 between upper and lower surfaces thereof, to receive the forks 50 of a forklift truck 14 in a generally conventional manner.

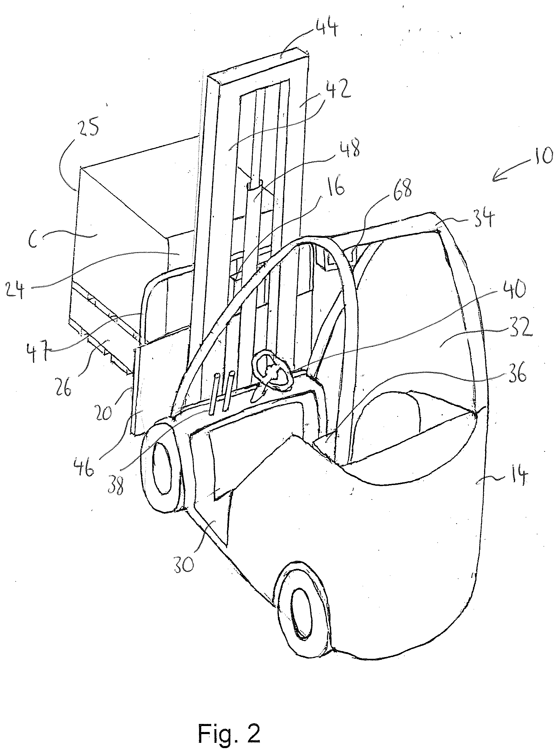

Fig. 1 shows the forklift truck 14 prior to engagement with the pallet 26. Fig. 2 shows the forklift truck 14 with the pallet 26 and cargo C located on the forks 50 and lifted some distance above the ground to enable movement of the forklift truck 14 and transportation of the cargo C.

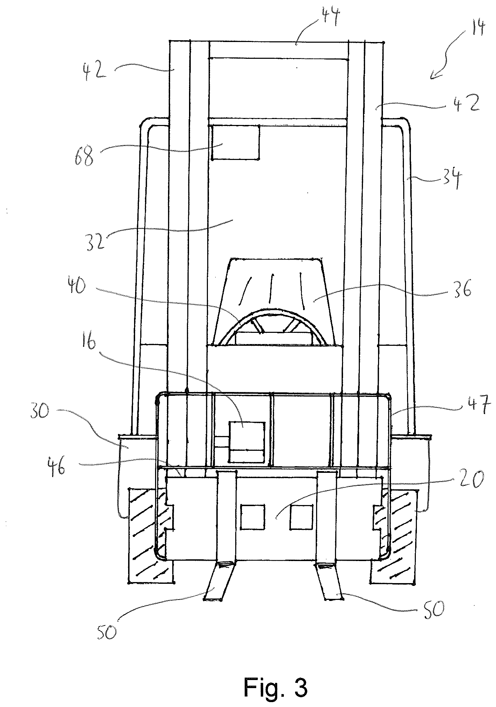

The scanner 16 is mounted to the backrest 47 of the carriage 46 (see particularly Fig. 3). The scanner 16 is mounted such that during use there is a direct visible path between the scanner 16 and the surface 24 of the cargo C, such that the identification marking 18 on the cargo C can be scanned by the scanner 16 without obstruction by structures of the forklift truck 14 or any other external obstruction.

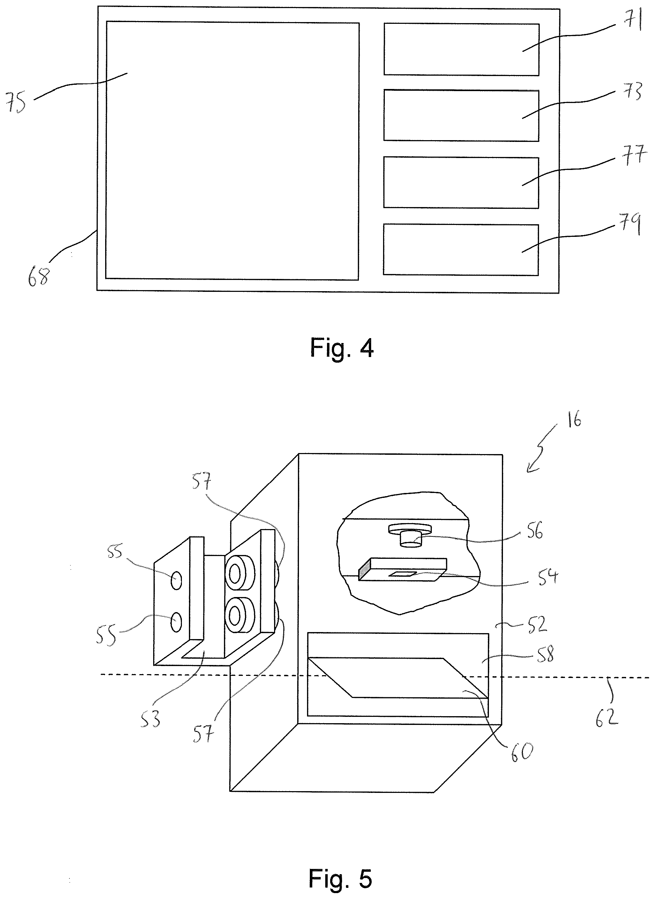

The forklift truck 14 also has a display unit 68, as shown in Fig. 4, which may comprise a receiver 71, a processor 73, a display 75, a memory 77, and a transmitter 79. The receiver 71 is disposed to receive signals from the scanner 16, the processor 73 is disposed to process those signals, and the display 75, which may be for example an LCD screen, is disposed to display information relating to those signals on the display, in an intelligible form, to be viewed and understood by the operator.

Fig. 5 shows a scanner 16 for a forklift truck 14 for lifting and transporting cargo C, the scanner 16 comprising means to scan cargo C on the forklift truck 14 to read an identification marking 18 on the object whilst the cargo C is in the vicinity of or on the forklift truck 14. The scanner 16 in one embodiment is suitable for mounting to a forklift truck 14. Fig. 5 is shown with a cutaway showing the scanner 16 comprising a housing 52 encompassing a sensor element 54 and a light transmitter element 56. Light from the light transmitter element 56, which could be one of a laser, LED, or similar light emitting device, is directed out of the housing 52 through a window 58. The housing 52 is substantially environmentally sealed. The light transmitted from the light transmitter element 56, and the light received by the sensor element 54 passes through the window 58 in the housing 52. The window 58 is at least partially transparent to the light transmitted and received by the scanner 16.

The housing 52 comprises a mounting bracket 53 on one or more sides to mount the scanner 16 to the forklift truck 14. Each bracket 53 comprises apertures 55 through which fasteners can be passed to engage with the forklift truck 14 to securely mount the scanner 16 to the forklift truck 14. Further, the bracket 53 is secured to the scanner 16 using anti-vibration mountings 57. The anti-vibration mountings 57 may be in the form of rubber washers, rubber bushes, springs, elastomeric foam or the like, used in a conventional manner. The anti-vibration mountings help to prevent misreading of the identification marking 18 and shock and vibration damage to the components of the scanner 16. It will be appreciated by those skilled in the art that any suitable mounting means, permanent or releasable, can be used.

Light transmitted from the housing 52 is directed away from the forklift truck 14 in a direction towards the cargo C to be scanned which is typically located at the front 22 of the forklift truck 14. In the embodiment illustrated, the location of the forks 50 in the openings 28 of the pallet 26 ensure correct location and orientation of the cargo C on the forklift truck 14. The identification marking 18 will have been positioned on the cargo C on the surface 24 with the knowledge that this is the, or one of the sides which will face towards the vehicle which ensures the identification marking 18 is correctly positioned to be scanned and read.

In this embodiment the identification marking 18 is located in a lowermost region of the surface 24 close to the pallet 26 of the cargo C, as shown in Fig. 1. Ideally the identification marking 18 will be within 30 cm of the top of the pallet 26, or the surface of the cargo C bearing the load on the pallet 26, on the surface 24 of the cargo C. The scanner 16 is positioned such that at least the lower 30 cm of the surface 24 of the cargo C is scanned during the scanning operation. Since the height of the cargo C may vary, it will be appreciated that by having the identification marking 18 on this lowermost region of the surface 24, any cargo C loaded onto the pallet 26 may be marked with the identification marking 18 in a position which may be scanned by the scanner 16, whilst the forks 50 of the forklift truck 14 are in a position suitable for being inserted into the openings 28 of the pallet 26 upon which cargo C is positioned. It will be appreciated that where directional location of cargo C on the forklift truck 14 is predetermined, such as in this embodiment by the orientation of the openings 28, the identification markings 18 will be positioned on the side or sides of the cargo C which could face the scanner 16, which in this embodiment are those sides being surface 24 or the opposite surface 25 on the other side of cargo C.

The housing 52 also contains an oscillating mirror 60 arrangement. The oscillating mirror 60 controllably rocks on an axis 62 and is located in the light path of the light transmitter element 56, to direct the light emitted from the light transmitter element 56 out of the housing 52 such that it scans the environment. The range of angles to which the oscillating mirror directs the light to be emitted out of the housing 52, through the window 58, may be such that a specific area of, a substantial part of, or all of the surface 24 of the cargo is scanned by the electromagnetic radiation.

In this example embodiment the sensor element 54 is a line scan sensor, suitable for receiving light reflected from an identification marking 18, such as a linear barcode arrangement, on the cargo C. The light projected from the light transmitter element 56 scans the environment under action of the oscillating mirror 60 in a plane perpendicular to the axis 62. Generally a barcode 18 will have a series of bar elements 64 orientated vertically and thus the line scan sensor 54 will be mounted horizontally such that the mirror 60 scans the object 12 in a vertical plane. Alternatively the barcode 18 could be orientated such that the bar elements 64 are orientated horizontally. In such a case the scanner 16 may be mounted such that the axis 62 of the oscillating mirror 60 is vertical, and so the object 12 is scanned in a horizontal plane.

The forklift truck 14 also has weighing means 20, such as forklift scales, on the carriage 26, such that when cargo C is lifted by the carriage, to be retained on the forks 50 of the forklift truck 14, the forklift scales are operable to weigh the cargo C.

The advantages of having the scanner 16 mounted on the forklift truck 14 for scanning cargo C in front of the forklift truck 14, include that the operator is not required to leave the driving station 36 or a second operative is not required to scan the cargo C, thus increasing safety for the operator(s) in the workplace, reducing manpower requirements, and the operation can be carried out in less time. Having the forklift scales 20 on the carriage 26 also obviates the need to convey cargo C to a weigh station such as a weigh-bridge or a weigh-platform, allowing the cargo C to be weighed in situ as it is picked up to be transported to another destination for loading or storage, without an intermediate weighing operation.

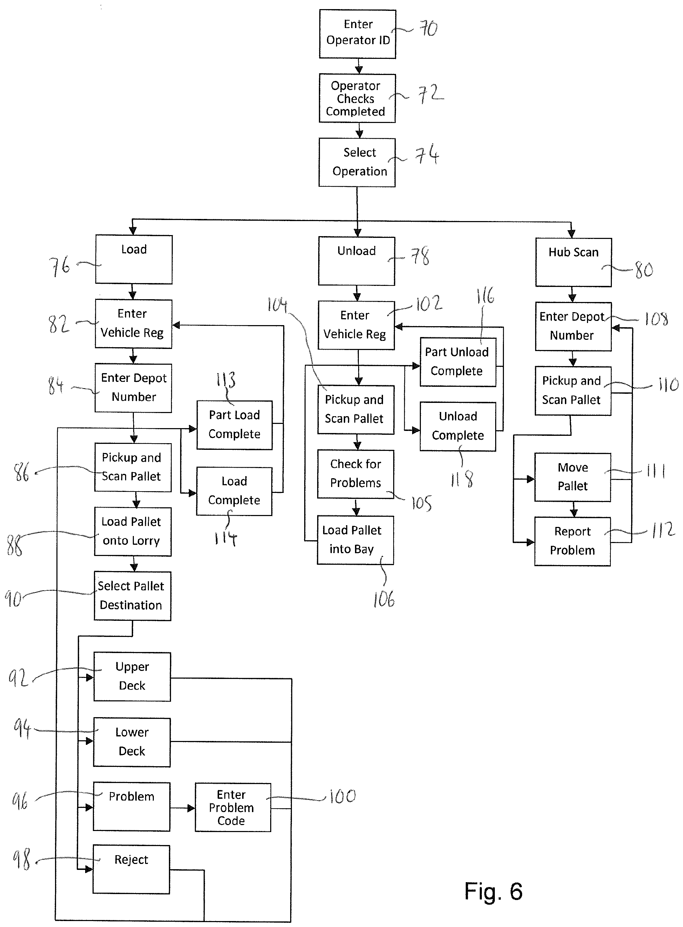

One method of loading and unloading cargo C onto and off of freight vehicles, such as vans, trucks, trains, ships, aeroplanes and the like, using the apparatus of the present invention is shown schematically in Fig. 6.

At step 70 of the operation, an operator enters the forklift truck 14, takes a position in the driving station 36 and typically then enters his operator ID into the display unit 68 (although this is not an essential part of the invention). At step 72 the operator carries out various checks including checking of the various controls of the forklift truck to ensure correct operation. At step 74 the operator then chooses an operation from a menu on the display unit 68. The typical choice of operations includes loading of freight vehicles (step 76), unloading of freight vehicles (step 78) and scanning cargo C in the hub (step 80).

In this specification a hub describes a central depot where cargo is transported to and from by freight vehicles, or is stored, and a depot comprises a warehouse or other such storage area for cargo, where cargo is transported to and from by freight vehicles, or is stored. Typically a distribution network will consist of a hub, and a number of other remote depots, the hub being the central depot to, from and through which cargo is transported to and from the other depots.

Cargo C, which is to be transported from one location to another location, will be scanned at a depot, and an identification marking 18 such as a barcode will be placed at a suitable location on the surface 24 of the cargo C. The identification marking will contain information, such as one or more of the identification of the cargo C, nature of the cargo C, content of the cargo C, weight of the cargo C, transporter of the cargo C, service level for the cargo C, owner of the cargo C, intended recipient of the cargo C, the identification of the depot of origin, final destination depot and the ultimate destination for the cargo C. The cargo C is then loaded onto a freight vehicle at the depot. Cargo C is then brought to the hub by the freight vehicle and unloaded from the freight vehicle in the hub. The cargo C is scanned and weighed to provide information for onward transportation of the cargo C, using the present invention as described. The cargo C may be organised in the hub ready for loading onto another freight vehicle or other freight vehicles to be transported to another depot which may be the depot closest to the ultimate destination of the cargo C. The cargo C is then scanned, weighed and loaded onto the freight vehicle(s) to transport the cargo C to the destination depot. Alternatively, cargo C may be unloaded from a freight vehicle in the hub, scanned and weighed to provide information for onward transportation of the cargo C, and then reloaded onto another freight vehicle for onward transportation. These operations are described in more detail below, with reference to Fig. 6.

In relation to a loading operation, in step 82 the operator will enter the registration number or other identification characteristic of the freight vehicle to be loaded, into the display unit 68, in order to identify the freight vehicle, to help ensure the correct cargo C is loaded on the freight vehicle. Following this step, in step 84, the operator then inputs the destination depot number into the display unit 68, to identify the depot where the cargo C is to be transported to. The operator then locates the cargo C within the hub which may be in a location such as a bay or bays specifically designated for the destination depot. The bay or bays relating to a depot may be temporarily or permanently assigned to that depot. In step 86, cargo C is picked up from the relevant location(s) within the hub using the forklift truck 14, scanned by the scanner 16 to identify the cargo C and weighed by the forklift scales 20. The scanner 16 and the forklift scales 20 transmit signals to the first receiver 71 which is comprised in the display unit 68 on the vehicle. The signals are then processed by the first processor 73 within the display unit 68. The processed data may then be displayed on the display 75 of the display unit 68 for viewing by the operative and stored in a first memory 77 located in the display unit 68. The display unit 68, which further comprises a first transmitter 79, may then send the data to a second processor (not shown), remotely located from the vehicle, via the first transmitter 79, for further storage and/or processing by the second processor. If an incorrect pallet 26 is picked up, in relation to the depot identified for the present loading operation, the display 75 will flag the error to the operator, to indicate that an incorrect pallet 26 has been picked.

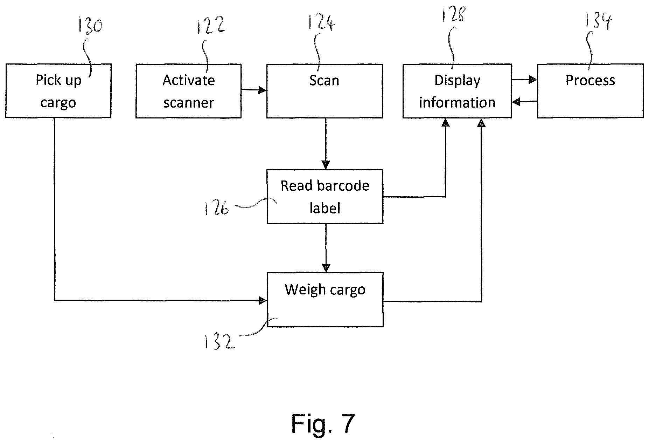

Fig. 7 illustrates a typical identification and weighing process of the present invention. The blocks of Fig. 7 represent steps in a method for the identification and weighing of cargo C, wherein an identification marking 18 on the cargo C is scanned, using a scanner 16 mounted on a vehicle 14, to identify the cargo C, and the cargo C is positioned upon forklift scales 20, to weigh the cargo C. The identification marking may contain data such as the identification of the cargo C, the nature of the cargo C, the content of the cargo C, the weight of the cargo C, the transporter of the cargo C, the service level for the cargo C, owner of the cargo C, intended recipient of the cargo C, the identification of the depot of origin, final destination depot and the ultimate destination of the cargo C.

In use, the vehicle 14, which is illustrated as a forklift truck, is positioned in front of the surface 24 of the cargo C so that the identification marking 18 is visible to the scanner 16. In step 122, the scanner 16 is activated by the operator, such as by pressing a scanner button, to cause the scanner 16 to scan the surface 24 of the cargo C. In step 124, the scanner 16 scans up and down the surface 24 of the cargo C by virtue of the oscillating mirror arrangement 60 in the scanner 16, as described above. In step 126, the scanner locates and reads the identification marking 18 such as a barcode on the surface 24 of the cargo C. In step 128, when the identification marking 18 has been scanned and read, the cargo C will have been identified and information relating to the cargo C will be displayed for the operators viewing on the display 75 of the display unit 68.

In step 130, the pallet is picked up by virtue of the operator moving the forklift truck 14 into position such that the forks 50 of the forklift truck 14 are inserted into the openings 28 of the pallet 26. The lifting of the pallet 26 may be done before, during or after the scanning operation. The forklift scales 20 are integral with the carriage 46. In step 132, once lifted, the forklift scales 20 on the carriage 46 are activated either manually, for example by the operator pressing a weighing button on the display unit 68, or automatically to weigh the cargo C. In step 128, the weight of the cargo C held in place on the forks 50 of the forklift truck 14 is then displayed for the operators viewing on the display 75 of the display unit 68.

Information relating to the identification of the cargo C, obtained from the scan of the identification marking 18 by the scanner 16, and information relating to the weight of the cargo C, obtained from the measurement of the cargo C by the forklift scales 20 may be stored in the memory 77 located in the display unit 68.

With information regarding the identification and weight of the cargo C obtained by the scanner 16 and forklift scales 20, signals are transmitted to the second processor, in step 134, which processor is typically remotely located relative to the vehicle, such as in a hub control centre or the like. In this embodiment the transmission of signals to the second processor is typically done after the cargo C has been loaded onto the freight vehicle, as described below in relation to steps 88 to 100, however in alternative embodiments the transmission of signals could be done before the cargo C has been loaded onto the freight vehicle, or after the freight vehicle has been fully or partially loaded, such that information relating to a number of pallets 26 of cargo C, is transmitted in a transmission of data or a sequence of transmissions of data stored in the memory 77 located in the display unit 68. The second processor can store the information for later use relating to, for example, quality control, cargo flow, inventory checking and/or billing purposes. In one embodiment the data received at the second processor may be used to produce a report to be sent to the destination depot, listing the cargo C that has been loaded onto the freight vehicle(s), such that the inventory can be assessed at both the hub and the depot. The second processor may automatically generate such a report. The processor may automatically transmit the report to users at the hub and/or depot.

Although in this embodiment the operator identifies the location from which cargo is to be loaded onto the freight vehicle, based on the identification of the destination depot in step 84, it will be appreciated that cargo C may be scanned, and the second processor, which may be remote from the forklift truck 14, may receive and process signals from the transmitter 79 in the display unit 68 to analyse where the cargo C is to be transported to and/or loaded. In this alternative embodiment, information regarding the desired location for the cargo C may then be transmitted from the second processor to the display unit 68, and may be processed by the processor 73 and displayed on the display 75 for viewing by the operator. The cargo C can then be taken to the appropriate location, which in this case is a specifically identified freight vehicle.

In step 88, the cargo C is then transported from its location in the hub, to be loaded onto the freight vehicle by the forklift truck 14. In step 90 the operator will input details of the position on the freight vehicle whereat he has placed the cargo C, into the display unit 68. For example, as in step 92, if the operator places the cargo C on the upper deck of the freight vehicle, or as in step 94, if the operator places the cargo C on the lower deck of the freight vehicle, he will select the appropriate deck option on the display unit 68. The signal that is then relayed to the second processor may indicate that cargo C has been loaded in that position on the freight vehicle.

Further options are available to the operator at this point. For instance, the operator may identify a problem with the cargo C (step 96) and enter a problem code into the display unit 68 (step 100). This problem may then be logged in the memory 77 of the display unit 68 and/or transmitted via the transmitter 79 to the second processor. Any problems with cargo C can then be traced, for example, for quality control purposes. In another option (step 98) the operator can reject the cargo C, if for instance it has been erroneously scanned or obtained from an incorrect location within the hub or if there is another reason why the cargo C is not to be loaded onto the freight vehicle.

Following the above steps, further cargo C can be loaded by returning to step 86. If a part load or a full load is complete, the operator can confirm the completion of the part or full load (step 113 and step 114 respectively) and then proceed to carry out a different task.

In relation to an unloading operation, the operator inputs the registration number or an identification characteristic of the freight vehicle into the display unit 68 (step 102), in order to identify the freight vehicle from which cargo C is being unloaded. In step 104, cargo C is picked up by the forklift truck 14, scanned by the scanner 16 and weighed by the forklift scales 20, in the operation as previously described above in relation to steps 122 to 132 of Fig. 7.

In relation to the unloading operation, once the scanner 16 has scanned the identification marking 18 on the surface 24 of the cargo C, information regarding the identification of the cargo C, the nature of the cargo C, the content of the cargo C, the transporter of the cargo C, the service level for the cargo C, the weight of the cargo C, owner of the cargo C, intended recipient of the cargo C, the identification of the depot of origin, final destination depot and the ultimate destination of the cargo C may be displayed on the display 75 of the display unit 68. The information may be displayed in an intelligible form for the operator. The information may be stored in the memory 77 in the display unit 68 and may be further processed to provide information regarding the location where the cargo C is to be transported to, for instance to identify a particular bay in the hub where the cargo C is to be unloaded to. The operator is then able to transport the cargo C to a location, such as a bay in the hub, assigned to receive cargo C for a specific depot, ready for onward transportation by a further freight vehicle. The bay or bays relating to a depot may be temporarily or permanently assigned to that depot.

Either once the cargo C has been unloaded from the freight vehicle, or once it has been put in a location, such as a bay, in the hub, or during transportation from the freight vehicle to the bay, the transmitter 79 in the display unit 68, then sends the data to the second processor. The data may be stored and/or processed further by the second processor. This operation confirms that cargo C has been unloaded and provides information regarding the weight of the cargo C, for example for weight calculation purposes or further identification purposes. In one embodiment the data received at the second processor may be used to produce a report to be sent to the origin depot, listing the cargo C that has been unloaded into the hub, such that the inventory can be assessed at both the hub and the depot. The second processor may automatically generate such a report. The processor may automatically transmit the report to users at the hub and/or depot.

Although in this embodiment the operator identifies the location to which cargo is to be unloaded to, from the freight vehicle, based on the identification of the destination depot as indicated in the information obtained from the processing of the signal from the scanner 16, it will be appreciated that cargo C may be scanned, and a second processor such as a central processing unit, which may be remote from the forklift truck 14, may receive and process signals, transmitted from the transmitter 79 of the display unit 68, to analyse where the cargo C is to be unloaded. In this alternative embodiment, information regarding the desired location for the cargo C is transmitted from the second processor to the display unit 68 for viewing by the operator on the display 75. In either embodiment, the cargo C can then be taken to the appropriate location, which in this case is a specifically designated bay within the hub.

The cargo C can be checked for problems (step 105), such as damage which may have been caused during transit of the cargo C. If a problem is identified, the operator can input the problem code relating to the specific problem into the display unit 68. This is then transmitted to the second processor for storage and/or analysis. The information may be used, for example, for quality control purposes. In step 106, the cargo C is then transported by the forklift truck 14 to the identified location in the hub. Further cargo C can then unloaded by returning to step 104. If a part unload or a full unload is complete, the operator can confirm the completion of the part or full unload (step 116 and step 118 respectively) and then proceed to carry out a different task.

In relation to a hub scan operation, in step 108 the destination depot number is entered into the display unit 68. Then in step 110, cargo C is picked up from a location within the hub, by the forklift truck 14, weighed by the forklift scales 20 and/or scanned by the scanner 16 in the operation previously described above in relation to steps 122 to 132 of Fig. 7. Such an operation can be used to optimise or otherwise reorganise the location of cargo C, during periods where freight vehicles are not being loaded or unloaded. For instance cargo C may be sorted depending on the service time for delivery of the cargo C, which information may be provided to the operator by the display 75 on the display unit 68 following processing of data from the scanner 16, by the processor 73. This can help to optimise the load time for freight vehicles entering the hub, and therefore optimise the cargo flow through the hub. The signals from the forklift scales 20 and/or the scanner 16 contain information which is transmitted to the receiver 71, processed by the processor 73 and displayed on the display 75 of the display unit 68 for viewing by the operator and may indicate that the cargo C is required to be relocated within the hub. The information contained in the signal from the scanner 16, following a scan of the identification marking 18 on the cargo C, may identify a service level for the cargo C. From the service level information service times may be obtained. In step 111, cargo C, identified for instance with shorter service times, can be moved to locations closer to the loading/unloading areas in the hub, and those with longer service times moved to locations further away from the loading/unloading areas in the hub. Alternatively the cargo C may be moved to a different location, such as a different bay within the hub, based on some other criterion. If cargo C is in the correct position it can be left in its current location. In step 112, if a problem with the cargo C is identified, such as damage to the cargo C, or an incorrect identification, the problem may be reported by the operator entering the relevant problem code into the display unit 68. Further cargo C can then scanned by returning to step 108. At any stage in the hub scan the operation can be stopped such that the operator can fulfil alternative tasks. The transmitter 79 in the display unit 68 may transmit the signals to the second processor which can process and/or facilitate the storage of the information in an external memory.

The advantages of having a display unit 68 capable of storing and transmitting signals and displaying information relating to the identification and weight of cargo C are that the information can be used to log, monitor and help control movement of cargo C into, around and out of the hub. In an alternative embodiment the second processor may communicate with the display unit 68 to provide instructions, on the display 75, to the operator relating to the desired movement of the cargo C.

Since the display 75 of the display unit 68 can display the desired location of the cargo C, the system has the advantage of not requiring the operator to manually determine the desired location for the cargo C, thus saving time and expense. Further the information relating to the cargo C and the data relating to the weight of the cargo C can be stored locally in the memory 77 in the display unit 68, for later retrieval and/or processing, or can be transmitted by the transmitter 79 in the display unit 68 to the second processor for storage and/or processing. This information can be used to provide, for example, information relating to cargo flow, weight limits for transportation, inventory checking and customer billing.

The provision of the scanner on the vehicle as part of the apparatus 10 enables the operative to enable the scanner 16 to scan cargo C without the operator leaving the driving station 36, or another operative being required, to scan the cargo C manually, for instance by using a hand scanner to scan over an identification marking 18 on the cargo C. Since no operative is required to be situated outside of the vehicle 14, safety of the operatives involved in the movement of cargo C within the hub is improved. Since the operator of the vehicle 14 does not have to dismount the driving station 36, the process may be carried out in less time than would be required if the operator needed to dismount the driving station 36 to scan the cargo C manually.

The blocks illustrated in Figs. 5 and 6 represent steps in a method. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

For example the identification marking 18 could be another form of identification other than a barcode, such as an array of machine vision readable numbers, or other symbols identifiable by automated scanning.

Further, it will be appreciated that the information provided by the identification marking 18 is not limited to the examples noted above and may be of a type suitable for the identification of any physical, commercial or other parameters or characteristics relating to the cargo C.

Various optical arrangements of the scanner 16 can be envisaged such that the components may be arranged in different locations within the scanner 16, or the scanner 16 may be arranged at a different location on the vehicle 14. For instance the scanner 16 may be mounted to the body 30 or to the carriage 46, or to the forks 50.

Although the present invention has been described by presenting the scanner 16 to be aimed from the front of the vehicle 14, it will be appreciated that the scanner 16 could be aimed from a different part of the vehicle 14 and/or to a different side of the vehicle 14. Further the scanner 16 may have a field of view such that the cargo C to be identified does not have to be in front of the vehicle 14.

Although the present invention has been described by presenting operation of the scanner 16 to be effected by a manual operation, by the operator, such as by pressing a button, the scanner 16 could be arranged to function on a permanent basis. Additionally, the scanner 16 may have a restricted range of detection to avoid reading incorrect identification markings 18. Further, separate detection means (not shown) may be provided to detect cargo C within a certain distance before the vehicle 14, and then activate the scanner 16 in order to locate and read the identification marking 18.

Although the present invention has been described with reference to a forklift truck 14, it will be appreciated that other vehicles 14, such as a mobile crane, a fixed crane or robotic arm, may be used.

Although the apparatus has been described as being operable in a hub and the method has been described in relation to being carried out in a hub, it will be appreciated that the apparatus and methods may be equally applicable to be operated or carried out in a depot or another location equipped with the apparatus described.

Although the present invention has been described in terms of movement of cargo C onto and off of vehicles 14, any other movement of the cargo C can be envisaged.

Although the present invention has been described by presenting the weighing means 20 as part of the vehicle 14, it will be appreciated that the weighing means 20 may be separate from the vehicle 14, such as by using a weigh-platform, weigh-bridge or the like rather than forklift scales 20 on the carriage 46 of a forklift truck 14. In such cases, it would be envisaged for efficiency that the cargo C would be weighed as the vehicle bearing the cargo C drives over the weighing means.

Although the present invention has been described by presenting the steps of entering freight vehicle identification characteristics and a depot number as manual operations carried out by the operator, it will be appreciated that these operations may be carried out by scanning an additional identification marking on the freight vehicle, the processor 73 of the display unit 68 processing the information encoded in the identification marking to provide information to the operator, via the display 75 on the display unit 68, as to the identification of the freight vehicle and the depot. Such a scanning operation may be carried out by the same or a different scanner than that described above.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A method of identifying and weighing cargo, the method comprising:
positioning cargo relative to a vehicle (14);
scanning an identification marking (18) on the cargo with a scanner (16) mounted on the vehicle (14) via an anti-vibration mounting (57), to identify the cargo; and
weighing the cargo;
**characterized by**:
transmitting a signal relating to the identification and/or the weight of the cargo to a first processor (73) on the vehicle (14);
receiving the signals at a first receiver (71) on the vehicle and processing the signals by the first processor (73) to provide a data output;
transmitting the signals or the data from the first processor (73) to a second processor remotely located from the vehicle (14) to provide a further data output;
the signals or the data from the first processor (73) being transmitted from a first transmitter (79) on the vehicle to a second receiver remotely located from the vehicle;
the signals or data received at the second receiver being processed by the second processor to provide the further data output; and
the signals or data from the second processor being transmitted by a second transmitter remotely located from the vehicle to the first receiver (71).

2. A method of identifying and weighing cargo as claimed in claim 1, wherein the scanner (16) scans an area of a surface (24) of the cargo to locate and read the identification marking, which area is a lowermost area of the surface (24).

3. A method of identifying and weighing cargo as claimed in claim 1 or claim 2, wherein the scanner (16) generates and transmits light towards the cargo, the light reflected from the surface (24) of the cargo being detected by a sensor (54) in the scanner (16).

4. A method of identifying and weighing cargo as claimed in claim 3, wherein the angle of the light transmitted from the scanner (16) and directed towards the cargo is varied through a range of angles in a plane generally perpendicular to the sensor (54) such that the surface (24) of the cargo is scanned by the light.

5. A method of identifying and weighing cargo as claimed in claim 4, wherein the light reflected from the cargo is directed to the sensor (54) in the scanner (16), and the scanner (16) generates and transmits signals relating to the light reflected from the identification marking (18) on the cargo as the signal relating to the identification of the cargo.

6. A method of identifying and weighing cargo as claimed in any one of claims 1 to 5, wherein the cargo is located on a weighing means (20), and the weighing means (20) generates and transmits the signal relating to the weight of the cargo.

7. A method of identifying and weighing cargo as claimed in any one of the preceding claims, wherein the signals and/or data output provide information to be displayed on a display (75) on the vehicle (14), in a form intelligible to a human operative of the vehicle, the information relating to one or more of the identification of the cargo, nature of the cargo, content of the cargo, owner of the cargo, transporter of the cargo, intended recipient of the cargo, where the cargo originated from, where the cargo is to be transported to, the weight of the cargo, the service level for the cargo.

8. An apparatus for treating cargo, the apparatus comprising:
a scanner (16) on a vehicle (14) for lifting and transporting cargo, the scanner (16) comprising a light source (56), an oscillating mirror (60) configured to reflect light from the light source (56) towards the cargo, and means (53) to mount the scanner to the vehicle (14) to scan cargo to read an identification marking (18) on the cargo, the means (53) to mount the scanner comprising an anti-vibration mounting (57);
a first processor (73) on the vehicle (14) configured to receive a signal relating to the identification and/or the weight of the cargo to provide a data output;
a first receiver (71) and a first transmitter (79) on the vehicle and in communication with the first processor (73);
a second processor remotely located from the vehicle (14) configured to receive the signals or the data from the first processor (73) to provide a further data output; and
a second receiver and a second transmitter remotely located from the vehicle and in communication with the second processor.

9. An apparatus as claimed in claim8, the scanner (16) being mounted at a position to scan a surface (24) of the cargo on which the identification marking (18) is provided, the scanner (16) generating signals relating to the identification marking (18), wherein the signals relating to the identification marking (18) contains data relating to the identification of the cargo.

10. An apparatus as claimed in claim 8 or claim 9, wherein the scanner (16) is operable to transmit signals relating to the identification of the cargo to a receiver (71).

11. An apparatus as claimed in any one of claims 8 to 10, wherein the scanner (16) comprises a line scan sensor (54) operable to detect light, the light source (56) is a visible or infra-red light source, and the oscillating mirror (60) is configured to reflect the light reflected from the cargo towards the sensor (54).

12. An apparatus as claimed in claim 11, wherein the oscillating mirror (60) is operable to scan the cargo with the light projected from the light source (56), generally perpendicular to the axis of the line scan sensor (54).

## Patentansprüche

1. Verfahren zum Identifizieren und Wiegen von Beförderungsgut, wobei das Verfahren umfasst:
Positionieren von Beförderungsgut relativ zu einem Fahrzeug (14);
Scannen einer Identifikationsmarkierung (18) an dem Beförderungsgut mit einem Scanner (16), der an dem Fahrzeug (14) über eine Anti-Vibrations-Anbringung (57) angebracht ist, um das Beförderungsgut zu identifizieren; und
Wiegen des Beförderungsguts;
**gekennzeichnet durch**:
Senden eines Signals, das sich auf die Identifikation und/oder das Gewicht des Beförderungsguts bezieht, an einen ersten Prozessor (73) an dem Fahrzeug (14);
Empfangen der Signale an einem ersten Empfänger (71) an dem Fahrzeug und Verarbeiten der Signale durch den ersten Prozessor (73), um eine Datenausgabe bereitzustellen;
Senden der Signale oder der Daten von dem ersten Prozessor (73) an einen zweiten Prozessor, der entfernt von dem Fahrzeug (14) angeordnet ist, um eine weitere Datenausgabe bereitzustellen;
wobei die Signale oder die Daten von dem ersten Prozessor (73) von einem ersten Sender (79) an dem Fahrzeug an einen zweiten Empfänger gesendet werden, der entfernt von dem Fahrzeug angeordnet ist;
wobei die Signale oder Daten, die an dem zweiten Empfänger empfangen werden, von dem zweiten Prozessor verarbeitet werden, um die weitere Datenausgabe bereitzustellen;
wobei die Signale oder Daten von dem zweiten Prozessor von einem zweiten Sender gesendet werden, der entfernt von dem Fahrzeug angeordnet ist, an den ersten Empfänger (71).

2. Verfahren zum Identifizieren und Wiegen von Beförderungsgut nach Anspruch 1, wobei der Scanner (16) einen Bereich einer Fläche (24) des Beförderungsguts scannt, um die Identifikationsmarkierung zu lokalisieren und zu lesen, wobei der Bereich ein tiefster Bereich der Fläche (24) ist.

3. Verfahren zum Identifizieren und Wiegen von Beförderungsgut nach Anspruch 1 oder 2, wobei der Scanner (16) Licht erzeugt und zu dem Beförderungsgut sendet, wobei das Licht, das von der Fläche (24) des Beförderungsguts reflektiert wird von einem Sensor (54) in dem Scanner (16) erfasst wird.

4. Verfahren zum Identifizieren und Wiegen von Beförderungsgut nach Anspruch 3, wobei der Winkel des Lichts, das von dem Scanner (16) gesendet wird und auf das Beförderungsgut gerichtet ist, über einen Bereich von Winkeln in einer Ebene variiert wird, die im Wesentlichen senkrecht zu dem Sensor (54) ist, so dass die Fläche (24) des Beförderungsguts durch das Licht gescannt wird.

5. Verfahren zum Identifizieren und Wiegen von Beförderungsgut nach Anspruch 4, wobei das Licht, das von dem Beförderungsgut reflektiert wird, auf den Sensor (54) in dem Scanner (16) gerichtet ist und der Scanner (16) Signale erzeugt und sendet, die sich auf das Licht beziehen, das von der Identifikationsmarkierung (18) an dem Beförderungsgut reflektiert wird, als das Signal, das sich auf die Identifikation des Beförderungsguts bezieht.

6. Verfahren zum Identifizieren und Wiegen von Beförderungsgut nach einem der Ansprüche 1 bis 5, wobei sich das Beförderungsgut auf einem Wiegemittel (20) befindet und das Wiegemittel (20) das Signal, das sich auf das Gewicht des Beförderungsguts bezieht, erzeugt und sendet.

7. Verfahren zum Identifizieren und Wiegen von Beförderungsgut nach einem der voranstehenden Ansprüche, wobei die Signale und/oder Datenausgabe eine Information bereitstellen, die auf einer Anzeige (75) des Fahrzeugs (14) anzuzeigen ist, in einer Form, die für einen menschlichen Betreiber des Fahrzeugs verständlich ist, wobei sich die Information auf eine oder mehr aus der Identifikation des Beförderungsguts, der Natur des Beförderungsguts, dem Inhalt des Beförderungsguts, dem Inhaber des Beförderungsguts, dem Beförderer des Beförderungsguts, dem beabsichtigten Empfänger des Beförderungsguts, wo das Beförderungsgut herstammt, wohin das Beförderungsgut transportiert werden soll, dem Gewicht des Beförderungsguts und dem Serviceniveau des Beförderungsguts bezieht.

8. Vorrichtung zum Bearbeiten von Beförderungsgut, wobei die Vorrichtung umfasst:
einen Scanner (16) an einem Fahrzeug (14) zum Anheben und Transportieren von Beförderungsgut, wobei der Scanner (16) eine Lichtquelle (56) umfasst, einen Oszillationsspiegel (60), der konfiguriert ist, Licht von der Lichtquelle (56) zu dem Beförderungsgut zu reflektieren und Mittel (53), um den Scanner an dem Fahrzeug (14) anzubringen, um Beförderungsgut zu scannen, um eine Identifikationsmarkierung (18) an dem Beförderungsgut zu lesen, wobei das Mittel (53) um den Scanner anzubringen eine Anti-Vibrations-Anbringung (57) umfasst;
einen ersten Prozessor (73) an dem Fahrzeug (14), der konfiguriert ist, ein Signal zu empfangen, das sich auf die Identifikation und/oder das Gewicht des Beförderungsguts bezieht, um eine Datenausgabe bereitzustellen;
einen ersten Empfänger (71) und einen ersten Sender (79) an dem Fahrzeug und in Kommunikation mit dem ersten Prozessor (73) ;
einen zweiten Prozessor, der sich entfernt von dem Fahrzeug (14) befindet, der konfiguriert ist, die Signale oder die Daten von dem ersten Prozessor (73) zu empfangen, um eine weitere Datenausgabe bereitzustellen; und
einen zweiten Empfänger und einen zweiten Sender entfernt angeordnet von dem Fahrzeug und in Kommunikation mit dem zweiten Prozessor.

9. Vorrichtung nach Anspruch 8, wobei der Scanner (16) an einer Position angebracht ist, um eine Fläche (24) des Beförderungsguts zu scannen, an welchem die Identifikationsmarkierung (18) bereitgestellt ist, wobei der Scanner (16) Signale erzeugt, die sich auf die Identifikationsmarkierung (18) beziehen, wobei die Signale, die sich auf die Identifikationsmarkierung (18) beziehen, Daten enthält, die sich auf die Identifikation des Beförderungsguts beziehen.

10. Vorrichtung nach Anspruch 8 oder 9, wobei der Scanner (16) betreibbar ist, Signale zu senden, die sich auf die Identifikation des Beförderungsguts beziehen, an einen Empfänger (71).

11. Vorrichtung nach einem der Ansprüche 8 bis 10, wobei der Scanner (16) einen Linien-Scansensor (54) umfasst, der betreibbar ist, Licht zu erfassen, wobei die Lichtquelle (56) eine Quelle von sichtbarem oder Infrarot-Licht ist und der Oszillationsspiegel (60) konfiguriert ist, das Licht, das von dem Beförderungsgut reflektiert wird, hin zu dem Sensor (54) zu reflektieren.

12. Vorrichtung nach Anspruch 11, wobei der Oszillationsspiegel (60) betreibbar ist, das Beförderungsgut mit dem Licht zu scannen, das von der Lichtquelle (56) projiziert wird, im Wesentlichen senkrecht zu der Achse des Linien-Scansensors (54).

## Revendications

1. Procédé d'identification et de pesage de cargaison, le procédé comprenant les étapes consistant à :
positionner la cargaison par rapport à un véhicule (14) ;
balayer un marquage d'identification (18) sur la cargaison avec un scanner (16) monté sur le véhicule (14) par l'intermédiaire d'un support antivibratoire (57), pour identifier la cargaison ; et
peser la cargaison ;
**caractérisé par** les étapes consistant à :
transmettre un signal relatif à l'identification et / ou au poids de la cargaison à un premier processeur (73) sur le véhicule (14) ;
recevoir les signaux d'un premier récepteur (71) sur le véhicule et traiter les signaux au moyen du premier processeur (73) pour fournir une sortie de données ;
émettre les signaux ou les données du premier processeur (73) vers un second processeur situé à distance du véhicule (14) pour fournir une sortie de données supplémentaire ;
les signaux ou les données du premier processeur (73) étant émis depuis un premier émetteur (79) sur le véhicule vers un second récepteur situé à distance du véhicule ;
les signaux ou les données reçus au niveau du second récepteur étant traités par le second processeur pour fournir la sortie de données supplémentaire ; et
les signaux ou les données du second processeur étant émis par un second émetteur situé à distance du véhicule vers le premier récepteur (71).

2. Procédé d'identification et de pesage de cargaison selon la revendication 1, dans lequel le scanner (16) balaie une zone d'une surface (24) de la cargaison pour localiser et lire le marquage d'identification, laquelle zone est la zone la plus basse de la surface (24).

3. Procédé d'identification et de pesage de cargaison selon la revendication 1 ou la revendication 2, dans lequel le scanner (16) génère et émet de la lumière vers la cargaison, la lumière réfléchie par la surface (24) de la cargaison étant détectée par un capteur (54) dans le scanner (16).

4. Procédé d'identification et de pesage de cargaison selon la revendication 3, dans lequel l'angle de la lumière émise depuis le scanner (16) et dirigée vers la cargaison varie selon une plage d'angles dans un plan généralement perpendiculaire au capteur (54) de sorte que la surface (24) de la cargaison est balayée par la lumière.

5. Procédé d'identification et de pesage de cargaison selon la revendication 4, dans lequel la lumière réfléchie par la cargaison est dirigée vers le capteur (54) dans le scanner (16), et le scanner (16) génère et émet des signaux relatifs à la lumière réfléchie par le marquage d'identification (18) sur la cargaison comme signal relatif à l'identification de la cargaison.

6. Procédé d'identification et de pesage de cargaison selon l'une quelconque des revendications 1 à 5, dans lequel la cargaison est située sur un moyen de pesée (20), et le moyen de pesée (20) génère et émet le signal relatif au poids de la cargaison.

7. Procédé d'identification et de pesage de cargaison selon l'une quelconque des revendications précédentes, dans lequel les signaux et / ou la sortie de données fournissent des informations à afficher sur un affichage (75) sur le véhicule (14), sous une forme intelligible pour un opérateur humain du véhicule, les informations se rapportant à une ou plusieurs des informations suivantes : l'identification de la cargaison, la nature de la cargaison, le contenu de la cargaison, le propriétaire de la cargaison, le transporteur de la cargaison, le destinataire prévu de la cargaison, d'où provient la cargaison, où la cargaison doit être transportée, le poids de la cargaison, le niveau de service de la cargaison.

8. Appareil pour traiter une cargaison, l'appareil comprenant :
un scanner (16) sur un véhicule (14) destiné à soulever et transporter une cargaison, le scanner (16) comprenant une source de lumière (56), un miroir oscillant (60) configuré pour réfléchir la lumière provenant de la source de lumière (56) vers la cargaison, et des moyens (53) pour monter le scanner sur le véhicule (14) pour balayer la cargaison pour lire un marquage d'identification (18) sur la cargaison, les moyens (53) pour monter le scanner comprenant un support antivibratoire (57) ;
un premier processeur (73) sur le véhicule (14) configuré pour recevoir un signal relatif à l'identification et / ou au poids de la cargaison pour fournir une sortie de données ;
un premier récepteur (71) et un premier émetteur (79) sur le véhicule et en communication avec le premier processeur (73) ;
un second processeur situé à distance du véhicule (14) configuré pour recevoir les signaux ou les données provenant du premier processeur (73) pour fournir une sortie de données supplémentaire ; et
un second récepteur et un second émetteur situé à distance du véhicule et en communication avec le second processeur.

9. Appareil selon la revendication 8, le scanner (16) étant monté au niveau d'un emplacement pour balayer une surface (24) de la cargaison sur laquelle est prévu le marquage d'identification (18), le scanner (16) générant des signaux relatifs au marquage d'identification (18), dans lequel les signaux relatifs au marquage d'identification (18) contiennent des données relatives à l'identification de la cargaison.

10. Appareil selon la revendication 8 ou la revendication 9, dans lequel le scanner (16) peut être mis en oeuvre pour émettre des signaux relatifs à l'identification de la cargaison vers un récepteur (71).

11. Appareil selon l'une quelconque des revendications 8 à 10, dans lequel le scanner (16) comprend un capteur à balayage linéaire (54) pouvant fonctionner pour détecter la lumière, la source de lumière (56) est une source lumineuse visible ou infrarouge, et le miroir oscillant (60) est configuré pour réfléchir la lumière réfléchie par la cargaison vers le capteur (54).

12. Appareil selon la revendication 11, dans lequel le miroir oscillant (60) peut fonctionner pour balayer la cargaison avec la lumière projetée à partir de la source de lumière (56), généralement perpendiculaire à l'axe du capteur de balayage de ligne (54).
